# EUROPEAN PATENT APPLICATION

(11) **EP 4 632 910 A1**
(43) Date of publication of application: **15.10.2025**
(21) Application number: 25161882.3
(22) Date of filing: 05.03.2025
(51) Int. Cl.: H01M 50/271, A62C 3/16, H01M 50/291, H01M 50/383

(54) **BATTERY PACK**

(30) Priority: 09.04.2024 KR 20240048148
(71) Applicant: SAMSUNG SDI CO., LTD., Yongin-si, Gyeonggi-do 17084 (KR)
(72) Inventor: HWANG, Ho Ryong, Suwon-si, Gyeonggi-do 16678 (KR)
(74) Representative: Gulde & Partner

(57) **Abstract**

A battery pack includes a housing, a battery cell inside the housing and including a vent, a cover coupled to the housing and facing the battery cell, a fire-extinguishing member between the battery cell and the cover and configured to supply a fire-extinguishing material to the battery cell if the battery cell ignites, and a support member facing the fire-extinguishing member and configured to support the fire-extinguishing member.

## Description

### BACKGROUND

### 1. Field

Aspects of embodiments of the present disclosure relate to a battery pack.

### 2. Discussion of Related Art

Unlike a primary battery that cannot be recharged, a secondary battery is a battery that can be recharged and discharged. A low-capacity secondary battery may be used for portable small-sized electronic devices, such as smartphones, feature phones, notebook computers, digital cameras, and camcorders, and a high-capacity secondary battery is widely used as a power source for driving a motor and a power storage battery in hybrid vehicles or electric vehicles. The secondary battery includes an electrode assembly including a positive electrode and a negative electrode, a case accommodating the electrode assembly, an electrode terminal connected to the electrode assembly, and the like.

The secondary battery may be used as a battery pack formed of a plurality of unit battery cells connected in series and/or parallel to provide high energy density. The battery pack may be formed by connecting electrode terminals of a plurality of unit batteries to each other to meet a desired amount of power and, for example, to implement a high-power secondary battery for an electric vehicle.

The above-described information disclosed in the technology that forms the background of the present disclosure is provided to improve understanding of the background of the present disclosure, and thus may include information that does not constitute the related art.

### SUMMARY

According to the present invention, a battery pack capable of improving fire-extinguishing efficiency if a battery cell ignites is provided.

The present invention is set out in the appended set of claims, wherein the drawings and respective description relate to advantageous embodiments thereof.

The above and other aspects and features of the present invention will be described in or will be apparent from the following description of some embodiments of the present invention.

According to the present invention, a battery pack includes a housing, a battery cell inside the housing and including a vent, a cover coupled to the housing and facing the battery cell, a fire-extinguishing member between the battery cell and the cover and configured to supply a fire-extinguishing material to the battery cell if the battery cell ignites, and a support member facing the fire-extinguishing member and configured to support the fire-extinguishing member.

The vent may face the cover.

The support member may include a support body between the battery cell and the fire-extinguishing member, a first connection member on one of the cover and the support body, and a second connection member on another of the cover and the support body and connected to the first connection member.

The cover and the support body may face each other in a first direction, the first connection member may include a first connection body extending from one of the cover and the support body, and the second connection member may include a second connection body extending from another of the cover and the support body and inserted in the first connection body.

The first connection member may further include a connection hole passing through the first connection body, and the second connection member may further include an insertion part extending from the second connection body and inserted in the connection hole.

The insertion part may extend from the second connection body in a direction intersecting the first direction.

The connection hole may extend in a direction intersecting the first direction, and the insertion part may be movable in the direction in which the connection hole extends.

An end portion of the connection hole may pass through the first connection body.

The support member may further include a transfer hole passing through the support body and facing the battery cell and the fire-extinguishing member.

A cross-sectional area of the transfer hole may increase toward the battery cell.

The transfer hole may include a first transfer hole facing the fire-extinguishing member, and a second transfer hole connected to the first transfer hole and facing the battery cell.

A cross-sectional area of the first transfer hole may increase toward the fire-extinguishing member, and a cross-sectional area of the second transfer hole may increase toward the battery cell.

The support member may further include a support rib between the support body and the fire-extinguishing member and in contact with the fire-extinguishing member.

The support member may further include a fixing rib extending from the support body toward the cover and facing a side surface of the fire-extinguishing member.

The battery pack may further include a holder between the battery cell and the support member and configured to support the battery cell.

The battery pack may further include a holder rib extending from the holder toward the support member and in contact with the support member.

The support member may include a support body between the holder and the fire-extinguishing member, a first connection member on one of the holder and the support body, and a second connection member on another of the holder and the support body and connected to the first connection member.

The holder and the support body may face each other in a first direction, the first connection member may include a first connection body extending from one of the holder and the support body, and the second connection member may include a second connection body extending from another of the holder and the support body and inserted in the first connection body in a direction parallel to the first direction.

The support member may further include a support cover between the cover and the fire-extinguishing member.

The support member may further include a cover rib extending from the support cover and in contact with the cover.

### BRIEF DESCRIPTION OF THE DRAWINGS

The drawings attached to this specification illustrate some embodiments of the present invention, and further describe aspects and features of the present invention together with the detailed description of the present invention. However, the present disclosure is not to be construed as being limited to the drawings.
FIG. 1 is an exploded perspective view schematically illustrating a configuration of a battery pack according to an embodiment of the present invention;
FIG. 2 is a perspective view schematically illustrating a configuration of a battery cell according to an embodiment of the present invention;
FIG. 3 is a cross-sectional view schematically illustrating a configuration of the battery cell of FIG. 2;
FIG. 4 is a bottom perspective view schematically illustrating configurations of a fire-extinguishing member and a support member according to an embodiment of the present invention;
FIG. 5 is an exploded perspective view schematically illustrating configurations of the fire-extinguishing member and the support member shown in FIG. 4;
FIG. 6 is a cross-sectional view schematically illustrating configurations of the fire-extinguishing member and the support member shown in FIG. 4;
FIG. 7 is an enlarged view schematically illustrating a configuration of a transfer hole according to an embodiment of the present invention;
FIGS. 8 and 9 are views illustrating some other examples of the transfer hole shown in FIG. 7;
FIG. 10 is a cross-sectional view schematically illustrating a configuration of a support member according to another embodiment of the present invention;
FIG. 11 is an exploded perspective view schematically illustrating a configuration of a support member according to another embodiment of the present invention;
FIG. 12 is a cross-sectional view schematically illustrating a configuration of the support member of FIG. 11;
FIG. 13 is an exploded perspective view schematically illustrating a configuration of a support member according to another embodiment of the present invention;
FIG. 14 is a cross-sectional view schematically illustrating a configuration of the support member of FIG. 13;
FIG. 15 is an exploded perspective view schematically illustrating a configuration of a battery pack according to another embodiment of the present invention;
FIG. 16 is a cross-sectional view schematically illustrating a configuration of a support member of the battery pack of FIG. 15;
FIG. 17 is an exploded perspective view schematically illustrating a configuration of the support member of FIG. 16;
FIG. 18 is a cross-sectional view schematically illustrating a configuration of a support member according to another embodiment of the present invention;
FIG. 19 is a cross-sectional view schematically illustrating a configuration of a support member according to another embodiment of the present invention; and
FIG. 20 is an exploded perspective view schematically illustrating a configuration of the support member of FIG. 19.

### DETAILED DESCRIPTION

Herein, some embodiments of the present invention will be described, in further detail, with reference to the accompanying drawings. The terms or words used in this specification and claims are not to be construed as being limited to the usual or dictionary meaning and are to be interpreted as having meaning and concept consistent with the technical idea of the present invention based on the principle that the inventor can be his/her own lexicographer to appropriately define the concept of the term.

The embodiments described in this specification and the configurations shown in the drawings are provided as some example embodiments of the present invention and do not necessarily represent all of the technical ideas, aspects, and features of the present invention. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element, or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

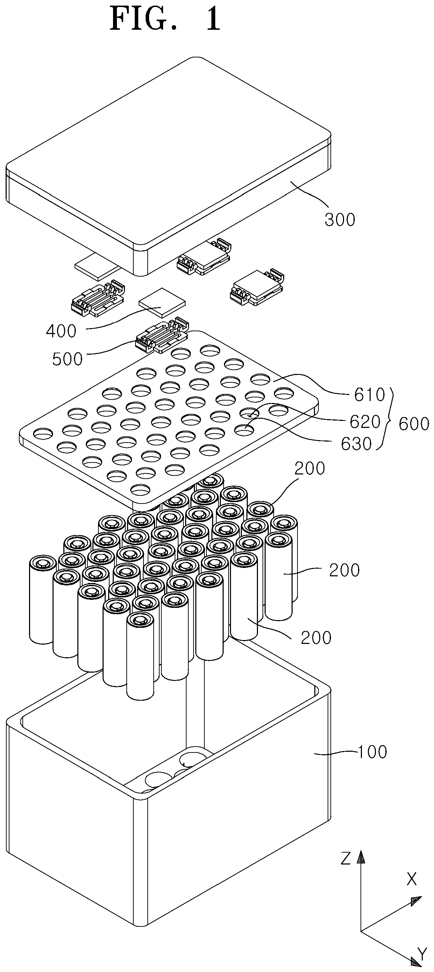

FIG. 1 is an exploded perspective view schematically illustrating a configuration of a battery pack according to an embodiment of the present invention;

Referring to FIG. 1, a battery pack according to the present embodiment includes a housing 100, a battery cell 200, a cover 300, a fire-extinguishing member 400, and a support member 500.

A first direction described below may refer to one of the directions parallel to a Z-axis based on FIG. 1. A second direction is a direction that intersects the first direction, and may refer to, for example, one of the directions parallel to an X-axis. In addition, a third direction is a direction that intersects the first and second directions, and may refer to, for example, one of the directions parallel to a Y-axis.

The housing 100 forms a general appearance of the battery pack and provides a space in which the battery cell 200 may be accommodated.

The housing 100 according to the present embodiment may be formed to have a shape of a box with a hollow interior and an open side. The open side of the housing 100 may be disposed to face upward. However, a cross-sectional shape of the housing 100 is not limited to a quadrangular shape, as shown in FIG. 1, and may be varied in design to have any of various shapes, such as any of a polygonal shape, a circular shape, and an oval shape.

The battery cell 200 may function as a unit structure, which stores and supplies power, in the battery pack.

Herein, a case in which the battery cell 200 is a lithium-ion secondary battery and has a cylindrical shape will be described as an example. However, the present invention is not limited thereto, and the battery cell 200 may be a lithium-polymer battery or a prismatic-type battery, for example.

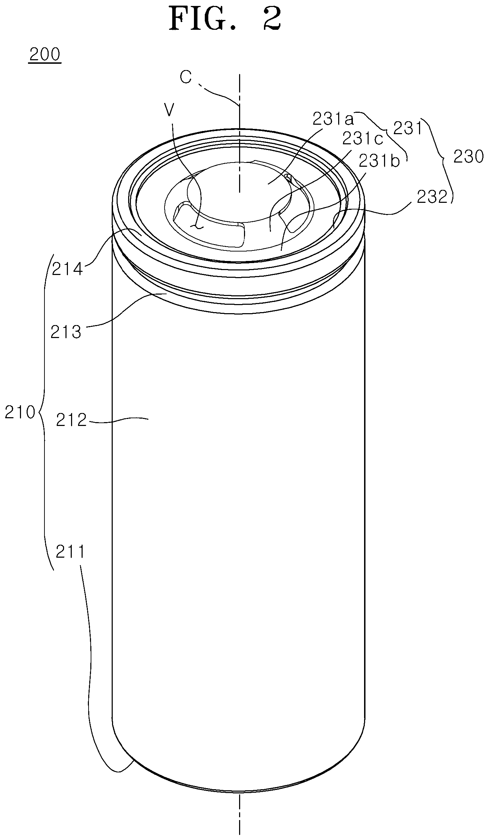

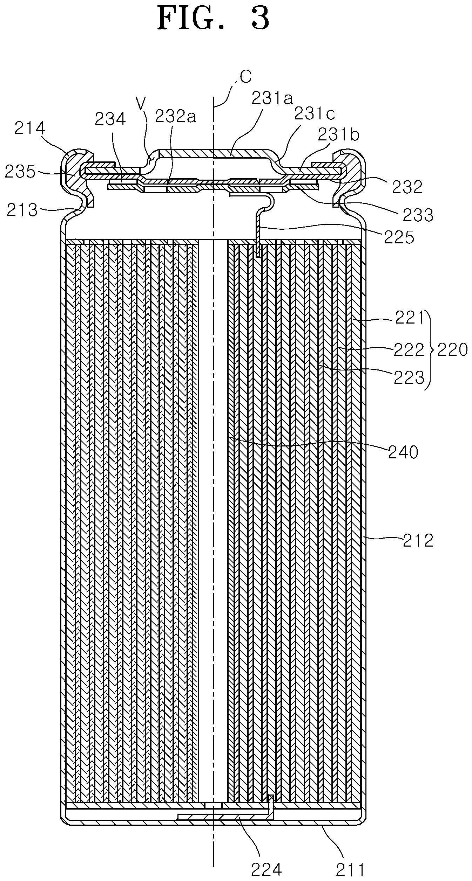

FIG. 2 is a perspective view schematically illustrating a configuration of a battery cell according to an embodiment of the present invention; and FIG. 3 is a cross-sectional view schematically illustrating a configuration of the battery cell of FIG. 2.

Referring to FIGS. 2 and 3, the battery cell 200 may include a cell case 210, an electrode assembly 220, and a cap assembly 230. The battery cell inside the housing 100 may comprise a vent V. The vent V may face the cover 300.

The cell case 210 may include a bottom part 211 with a generally circular shape and a side wall 212 extending by a certain length upward from the bottom part 211. In an embodiment, the cell case 210 may be made of steel, a steel alloy, nickel-plated steel, a nickel-plated steel alloy, aluminum, or an aluminum alloy.

During an assembly process of the battery cell 200, an upper portion of the cell case 210 may be open. Thus, during the assembly process of the battery cell 200, the electrode assembly 220 may be integrated into a structure and inserted into the cell case 210. Thereafter, an electrolyte may be additionally injected into the cell case 210.

In an embodiment, a beading part 213 recessed in a direction of a central axis of the cap assembly 230 may be formed on an upper side of the cell case 210 to prevent or substantially prevent the electrode assembly 220 from being separated to the outside. The beading part 213 may be disposed below the cap assembly 230. A crimping part 214 bent around (e.g., to surround) an edge of the cap assembly 230 may be formed above the beading part 213.

The electrode assembly 220 may be accommodated inside the cell case 210. The electrode assembly 220 may include or be referred to as an electrode, an electrode group, or a jelly roll. The electrode assembly 220 may include a negative electrode plate 221 coated with a negative electrode active material (e.g., graphite, carbon, or the like), a positive electrode plate 222 coated with a positive electrode active material (e.g., a transition metal oxide (e.g., LiCoO₂, LiNiO₂, LiMn₂O₄, or the like)), and a separator 223 located between the negative electrode plate 221 and the positive electrode plate 222 to prevent or substantially prevent a short circuit and allow only lithium ions to move. In an embodiment, the negative electrode plate 221, the positive electrode plate 222, and the separator 223 may be wound in a substantially cylindrical shape. In some examples, the negative electrode plate 221 may be a copper (Cu) foil, the positive electrode plate 222 may be an aluminum (AI) foil, and the separator 223 may be polyethylene (PE) or polypropylene (PP).

In an embodiment, a negative electrode tab 224 may be welded to the negative electrode plate 221. The negative electrode tab 224 may protrude and extend by a length (e.g., a certain length) downward from the electrode assembly 220. In an embodiment, a positive electrode tab 225 may be welded to the positive electrode plate 222. The positive electrode tab 225 may protrude and extend by a length (e.g., a certain length) upward from the electrode assembly 220. In an embodiment, the negative electrode tab 224 may be made of copper (Cu) or nickel (Ni), and the positive electrode tab 225 may be made of aluminum (Al).

In an embodiment, the negative electrode tab 224 may be welded to the bottom part 211 of the cell case 210. Thus, the cell case 210 may function as a negative electrode. In some examples, the negative electrode tab 224 may be ultrasonically or laser welded to the bottom part 211 of the cell case 210. However, the positive electrode tab 225 may be welded to the bottom part 211 of the cell case 210, and, in this case, the cell case 210 may function as a positive electrode.

In an embodiment, the electrode assembly 220 may further include a center pin 240. In an embodiment, the center pin 240 may have a hollow circular pipe shape and may be coupled to a center or approximately the center of the electrode assembly 220. In an embodiment, the center pin 240 may be made of steel, stainless steel, aluminum, an aluminum alloy, or polybutylene terepthalate, but a material thereof is not limited thereto. The center pin 240 may suppress deformation of the electrode assembly 220 during charging and discharging of the secondary battery. The center pin 240 may function as a passage through which gas generated inside the secondary battery may move. However, the center pin 240 may be omitted.

The cap assembly 230 may seal an opening of the cell case 210 to protect the electrode assembly 220 from the external environment. When an internal pressure of the cell case 210 is higher than a reference pressure, such as due to thermal runaway or ignition of the battery cell 200, the cap assembly 230 may rupture to release an internal gas of the cell case 210 to the outside. In some examples, the cap assembly 230 may function as a positive electrode terminal.

The cap assembly 230 may include a cap-up 231, a vent plate 232, and a cap-down 233.

The cap-up 231 may function as a terminal electrically connected to an external device. In some examples, the cap-up 231 may function as a positive electrode terminal. In an embodiment, the cap-up 231 may be made of aluminum or an aluminum alloy.

As an example, the cap-up 231 may include an inner body 231a, an outer body 231b, and a bridge 231c.

The inner body 231a may form generally or define a central portion of the cap-up 231. As an example, the inner body 231a may be formed to have a generally disk shape. The inner body 231a may be disposed such that a central axis thereof is aligned with a central axis C of the cell case 210.

The outer body 231b may form generally or define of an edge of the cap-up 231. As an example, the outer body 231b may be formed to have a generally hollow ring shape. A diameter of the outer body 231b may be greater than a diameter of the inner body 231a. The outer body 231b may be disposed coaxially with the inner body 231a. That is, a central axis of the outer body 231b may be disposed to be aligned with the central axis C of the cell case 210 and the inner body 231a.

The inner body 231a and the outer body 231b may be disposed to be vertically spaced apart from each other. As an example, the outer body 231b may be disposed below the inner body 231a. However, the inner body 231a and the outer body 231b may be disposed in a same plane.

The bridge 231c is disposed between the inner body 231a and the outer body 231b, and may support the inner body 231a with respect to the outer body 231b. In an embodiment, the bridge 231c may be formed to have a generally bar shape with both, or opposite, end portions connected to an outer circumferential surface of the inner body 231a and an inner circumferential surface of the outer body 231b, respectively. A plurality of bridges 231c may be provided. The plurality of bridges 231c may be arranged to be spaced apart from each other at an interval (e.g., a set interval) along a circumference around the central axis C of the cell case 210. In an embodiment, the interval between the adjacent bridges 231c may be the same.

The vent V may be formed in the cap-up 231. The vent V may discharge an internal gas to the outside when an abnormal internal pressure is generated inside the cell case 210 due to overcharging or the like.

The vent V according to the present embodiment may be formed to have a shape of a hole formed to pass through the cap-up 231. As an example, the vent V may be formed to have the shape of a hole passing through a region between the inner body 231a and the outer body 231b. A plurality of vents V may be provided. Each of the plurality of vents V may be individually disposed between the adjacent bridges 231c. However, a number of the vents V is not limited to that shown in FIG. 3, and may be varied in design.

The vent plate 232 may be located below the cap-up 231. The vent plate 232 may be in contact with (e.g., in close contact with), coupled to, or connected to a lower portion of the cap-up 231. As an example, the vent plate 232 may be in contact with (e.g., in close contact with), coupled to, or connected to an edge of the cap-up 231, such as the outer body 231b, other than the center portion, such as the inner body 231a, that protrudes upward in the cap-up 231. In an embodiment, an end portion of the vent plate 232 may extend in a curved manner around (e.g., to surround) an end portion of the outer body 231b. In an embodiment, the vent plate 232 may be made of aluminum or an aluminum alloy.

The vent plate 232 may include a notch 232a. The notch 232a may be formed to be recessed to a depth (e.g., a certain depth) from an outer side surface of the vent plate 232.

As an internal pressure of the battery cell 200 rises above a reference pressure (or a rupture pressure of the vent plate 232), such as due to thermal runaway or ignition of the battery cell 200, the notch 232a may rupture, and emissions generated inside the cell case 210 may pass sequentially through the notch 232a and the vent V to be discharged to the outside. Here, the emissions discharged from the vent V may include at least one of flames, gases, and smoke.

The cap-down 233 may be disposed below the vent plate 232. The cap-down 233 may be in contact with (e.g., in close contact with), connected to, or coupled to the vent plate 232. The cap-down 233 may be electrically connected to the electrode assembly 220 through the positive electrode tab 225. The cap-down 233 may be electrically connected to the vent plate 232 and the cap-up 231. In an embodiment, the positive electrode tab 225 of the electrode assembly 220 may be welded to a lower surface of the cap-down 233. In some examples, the lower surface of the cap-down 233 may be ultrasonic and/or laser welded to the positive electrode tab 225. In some examples, the cap-down 233 may be made of aluminum or an aluminum alloy.

In some examples, in the event of thermal runaway or ignition of the battery cell 200, the vent plate 232 may be deformed by the internal pressure of the cell case 210, and the cap-down 233 and the vent plate 232 may be electrically separated from each other.

A first insulating member 234 may be installed between the vent plate 232 and the cap-down 233. The first insulating member 234 may be located between an edge of the vent plate 232 and an edge of the cap-down 233. The first insulating member 234 may serve to insulate between the cap-down 233 and the vent plate 232 when the vent plate 232 is deformed by the internal gas. In some examples, the first insulating member 234 may be formed of a resin material, such as polyethylene (PE), polypropylene (PP), polyethylene terephthalate (PET), or the like, but the material is not limited here.

A second insulating member 235 may be installed on the upper side of the cell case 210. The second insulating member 235 may be located between an end portion of the vent plate 232, which is around (e.g., surrounds) the outer body 231b of the cap-up 231, and the cell case 210. Both, or opposite, sides of the second insulating member 235 may be respectively in close contact with the end portion of the vent plate 232 and inner side surfaces of each of the crimping part 214 and the beading part 213. The second insulating member 235 may insulate between the cell case 210 and the cap assembly 230. The second insulating member 235 may be formed of a resin material, such as polyethylene (PE), polypropylene (PP), polyethylene terephthalate (PET), or the like, but a material is not limited here.

The battery cell 200 may be disposed inside the housing 100. As an example, the battery cell 200 may be disposed in an internal space of the housing 100. The bottom part 211 of the battery cell 200 may be disposed to face a bottom surface of the housing 100. The vent V located at an upper end portion of the battery cell 200 may be disposed to face the open side of the housing 100.

A plurality of battery cells 200 may be provided. In an embodiment, the plurality of battery cells 200 may be disposed parallel to each other in the housing 100. The plurality of battery cells 200 may be disposed in any of various patterns inside the housing 100, such as a grid shape or a zigzag shape. A number of the battery cells 200 may be variously changed, such as depending on a size of the housing 100 or the like.

The cover 300 may be coupled to the housing 100 and may close the internal space of the housing 100. As an example, the cover 300 may be formed to have a shape of a box with a hollow interior and an open side. The open side of the cover 300 may be disposed to face the open side of the housing 100, i.e., an upper side surface of the housing 100. Accordingly, the vent V and the cover 300 of the battery cell 200 may be disposed to face each other in a direction parallel to the first direction, i.e., in a vertical direction. The cover 300 may be fixed to the housing 100 by any of various types of coupling methods, such as bolting, welding, fitting, and the like. In an embodiment, a thickness of the cover 300 may be equal to a thickness of the housing 100.

The fire-extinguishing member 400 may counteract a thermal runaway or ignition phenomenon of the battery cell 200 by supplying a fire-extinguishing material to the battery cell 200 in the event of thermal runaway or ignition of the battery cell 200.

The fire-extinguishing member 400 may be heated by flames, gases, or the like generated from the battery cell 200 in the event of thermal runaway or ignition of the battery cell 200. As the fire-extinguishing member 400 is heated to a certain temperature (e.g., a set temperature) or higher, the fire-extinguishing member 400 may supply a fire-extinguishing material into the internal space of the housing 100 and the battery cells 200.

In an embodiment, the fire-extinguishing member 400 may be configured to be in solid form below the certain temperature (e.g., the set temperature), and to spray the fire-extinguishing material in aerosol form through its own combustion reaction at a certain temperature (e.g., the set temperature) or higher.

In an embodiment, the fire-extinguishing member 400 may be configured to spray the fire-extinguishing material inside a finishing or sheathing material as the finishing or sheathing material or the like physically changes (breaks, ruptures, melts, or the like) or undergoes a phase transition at a certain temperature (e.g., a set temperature) or higher.

In an embodiment, the fire-extinguishing material may be formed in a solid state, such as a powder, or in a liquid or gaseous state. The fire-extinguishing material may include any of various materials having fire-extinguishing capabilities, including any of sodium hydrogen carbonate (NaHCO₃), potassium hydrogen carbonate (KHCO₃), or a mixture of potassium hydrogen carbonate (KHCO₃) and urea ((NH₂)₂CO), halogen compounds, halons, water-based fire-extinguishing agents, carbon dioxide, and the like.

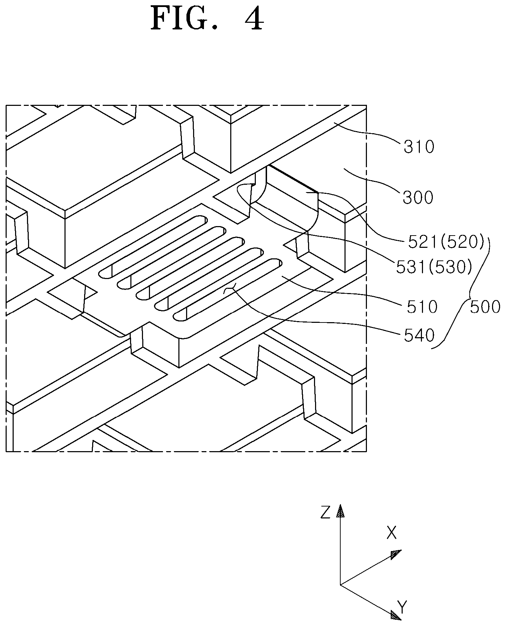

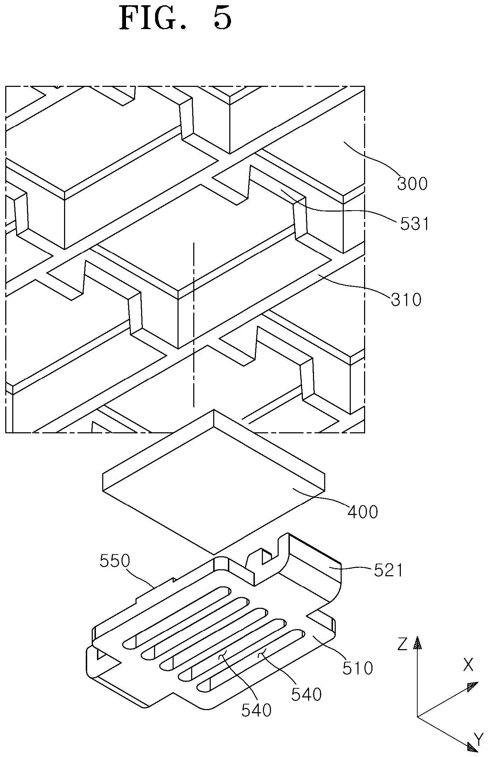

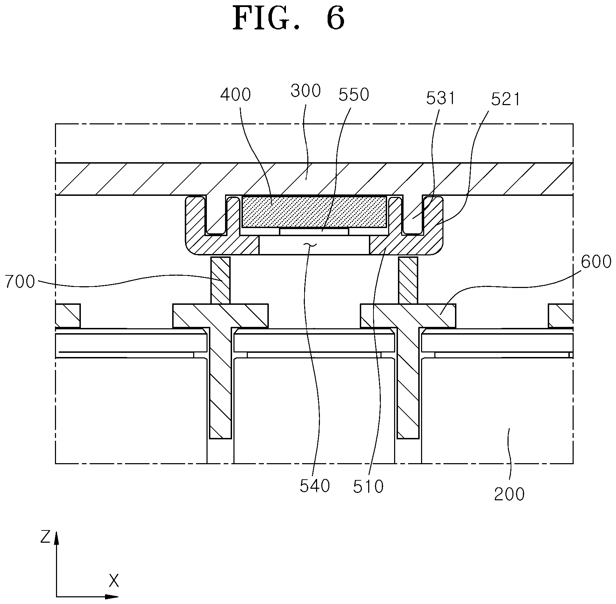

FIG. 4 is a bottom perspective view schematically illustrating configurations of a fire-extinguishing member and a support member according to an embodiment of the present invention; FIG. 5 is an exploded perspective view schematically illustrating configurations of the fire-extinguishing member and the support member shown in FIG. 4; and FIG. 6 is a cross-sectional view schematically illustrating configurations of the fire-extinguishing member and the support member shown in FIG. 4.

Referring to FIGS. 1 to 6, the fire-extinguishing member 400 according to the present embodiment may be formed to have a generally sheet shape. The fire-extinguishing member 400 may be disposed between the battery cell 200 and the cover 300.

As an example, a plurality of partitions 310 configured to partition an internal space of the cover 300 may be formed on the cover 300. However, an arrangement form of the plurality of partitions 310 and an interval between the adjacent partitions 310 are not limited to the form shown in FIG. 4, and may be variously changed in design. The fire-extinguishing member 400 may be inserted into a space formed between the adjacent partitions 310.

An upper surface of the fire-extinguishing member 400 may be disposed to face a lower surface of the cover 300, and a lower surface of the fire-extinguishing member 400 may be disposed to face the vent V of the battery cell 200. However, a cross-sectional shape of the fire-extinguishing member 400 may be varied in design to any of various shapes, such as a circular shape, an elliptical shape, and a polygonal shape in addition to a quadrangular shape shown in FIGS. 4 and 5.

A plurality of fire-extinguishing members 400 may be provided. The plurality of fire-extinguishing members 400 may be disposed to be spaced apart from each other in the internal space of the housing 100 formed between the battery cell 200 and the cover 300. In an embodiment, an interval between the adjacent fire-extinguishing members 400 may be greater than an interval between adjacent battery cells 200. However, a number and arrangement form of the plurality of fire-extinguishing members 400 are not limited to those shown in FIG. 1, and may be variously changed in design depending, for example, on a size and cross-sectional shape of the housing 100.

The support member 500 is disposed to face the fire-extinguishing member 400, and may support the fire-extinguishing member 400. That is, the support member 500 may separate the fire-extinguishing member 400 from the battery cell 200 by a certain distance inside the housing 100 and prevent or substantially prevent the fire-extinguishing member 400 from separating from a set position. Accordingly, if the battery cell 200 ignites, the support member 500 may ensure that the fire-extinguishing material supplied from the fire-extinguishing member 400 is uniformly (uniformly or substantially uniformly) sprayed onto the plurality of battery cells 200, and may improve the fire-extinguishing efficiency of the fire-extinguishing member 400. Thus, the support member 500 may be configured to support the fire-extinguishing member 400.

A plurality of support members 500 may be provided. The support members 500 may be disposed to individually face the different or respective fire-extinguishing members 400, and may individually support the different or respective fire-extinguishing members 400.

The support member 500 according to the present embodiment includes a support body 510, a first connection member 520, and a second connection member 530.

The support body 510 may be disposed between the battery cell 200 and the fire-extinguishing member 400. That is, the cover 300, the fire-extinguishing member 400, the support body 510, and the battery cell 200 may be sequentially disposed in a direction parallel to the first direction. In some embodiments, the cover 300 and the support body 510 may face each other in the first direction.

The support body 510 according to the present embodiment may be formed to have a generally sheet shape. An upper surface of the support body 510 may be disposed to face the fire-extinguishing member 400, and a lower surface of the support body 510 may be disposed to face the upper end portion of the battery cell 200. The support body 510 may be disposed parallel to the fire-extinguishing member 400.

The first connection member 520 and the second connection member 530 may mechanically connect the support body 510 to the cover 300 by a mutual fastening force.

Herein, a case in which the first connection member 520 is provided on the support body 510 and the second connection member 530 is provided on the cover 300 will be described as an example. However, the present disclosure is not limited thereto, and the first connection member 520 may be provided on the cover 300 and the second connection member 530 may be provided on the support body 510. In an embodiment, the first connection member 520 may be on one of the cover 300 and the support body 510; and a second connection member 530 may be on another of the cover 300 and the support body 510 and may be connected to the first connection member 520.

The first connection member 520 according to the present embodiment may include a first connection body 521.

The first connection body 521 may extend from one of the cover 300 and the support body 510.

The first connection body 521 according to the present embodiment may extend from the support body 510 toward the cover 300. The first connection body 521 may be disposed parallel to the first direction. The first connection body 521 may be formed such that an interior is hollow. An upper surface of the first connection body 521 facing the cover 300 may be open. In one embodiment, the first connection member 520 may comprise a first connection body 521 extending from one of the cover 300 and the support body 510.

A plurality of first connection bodies 521 may be provided. Each of the plurality of first connection bodies 521 may extend from an edge region of the support body 510, which does not directly face the fire-extinguishing member 400.

As an example, as shown in FIGS. 4 and 5, the first connection bodies 521 may be formed in pairs. The pair of first connection bodies 521 may be disposed to be spaced apart from each other in the second direction that intersects the first direction.

However, a number and arrangement state of the first connection bodies 521 are not limited thereto, and may be variously changed in design.

In the above, the first connection body 521 is described as extending from the support body 510 as an example, but the first connection body 521 is not limited thereto, and when the first connection member 520 is provided in the cover 300, the first connection body 521 may extend from the cover 300 toward the support body 510.

The second connection member 530 according to the present embodiment may include a second connection body 531.

The second connection body 531 may extend from the other of the cover 300 and the support body 510. In one embodiment, the second connection member 530 may comprise a second connection body 531 extending from another of the cover 300 and the support body 510 and inserted in the first connection body 521.

The second connection body 531 according to the present embodiment may extend from the cover 300 toward the support body 510 in a direction parallel to the first direction. The second connection body 531 may be disposed to face the open side of the first connection body 521. As a separation distance between the cover 300 and the support body 510 is reduced to a certain length or less, the second connection body 531 may be inserted into the first connection body 521.

In an embodiment, an outer side surface of the second connection body 531 may be press-fitted or interference-fitted into an inner side surface of the first connection body 521. Accordingly, the second connection body 531 may be fixed while being inserted into the first connection body 521.

A plurality of second connection bodies 531 may be provided. A number of the second connection bodies 531 may be the same as a number of the first connection bodies 521. Each of the second connection bodies 531 may be individually inserted into a different or respective first connection body 521.

In the above, the second connection body 531 is described as extending from the cover 300 as an example, but the second connection body 531 is not limited thereto, and when the second connection member 530 is provided in the support body 510, the second connection body 531 may extend from the support body 510 toward the cover 300.

The support member 500 according to the present embodiment may further include a transfer hole 540.

The transfer hole 540 may allow flames, gases, or the like generated from the battery cell 200 to be transferred to the fire-extinguishing member 400 through the support body 510 or provide a path through which the fire-extinguishing material supplied from the fire-extinguishing member 400 is transferred to the battery cell 200, if the battery cell 200 ignites.

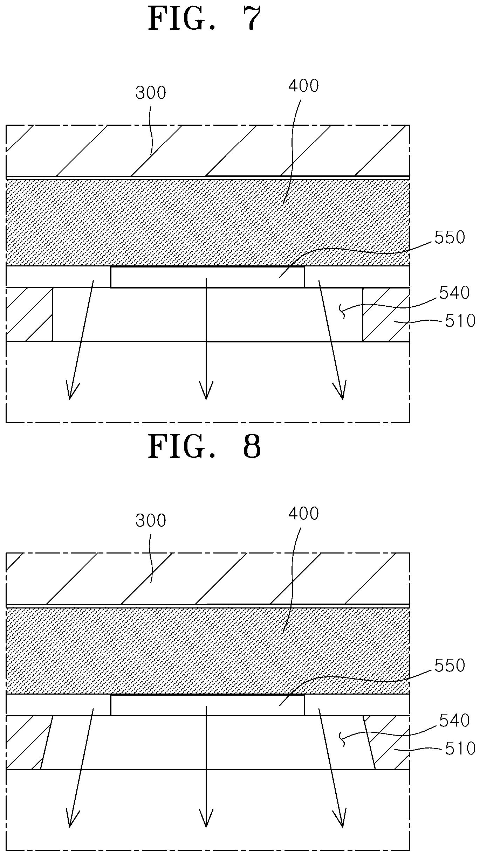

FIG. 7 is an enlarged view schematically illustrating a configuration of the transfer hole according to an embodiment of the present invention.

Referring to FIGS. 1 to 7, the transfer hole 540 according to the present embodiment may have a shape of a hole passing through the support body 510. Both, or opposite, sides of the transfer hole 540 may pass through upper and lower surfaces of the support body 510, respectively. Both, or opposite, sides of the transfer hole 540 may be disposed to face the battery cell 200 and the fire-extinguishing member 400, respectively. However, a cross-sectional shape of the transfer hole 540 is not limited to the shape shown in FIG. 5, and may be varied in design to have any of various shapes, such as any of a polygonal shape, a circular shape, and an oval shape. In an embodiment, a cross-sectional area of the transfer hole 540 perpendicular to the first direction may be constant in all sections.

A plurality of transfer holes 540 may be provided. The plurality of transfer holes 540 may be disposed to be spaced apart from each other inside the support body 510. However, an arrangement state of the plurality of transfer holes 540 is not limited to that shown in FIG. 5, and may be variously changed in design such that a space between the support body 510 and the battery cell 200 can be connected to a space between the support body 510 and the fire-extinguishing member 400.

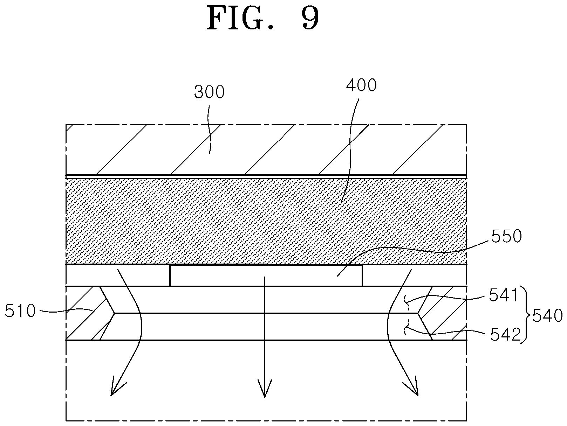

FIGS. 8 and 9 are views illustrating some other examples of the transfer hole shown in FIG. 7.

Referring to FIG. 8, the cross-sectional area of the transfer hole 540 perpendicular to the first direction may be formed to increase toward the battery cell 200. Accordingly, the transfer hole 540 may cause the fire-extinguishing material supplied from the fire-extinguishing member 400 to be sprayed over a wider area, which can improve a fire-extinguishing efficiency.

Referring to FIG. 9, the transfer hole 540 may include a first transfer hole 541 and a second transfer hole 542.

The first transfer hole 541 may be disposed to face the fire-extinguishing member 400. The first transfer hole 541 according to the present embodiment may refer to an upper side region of the transfer hole 540, which passes through the upper surface of the support body 510.

A cross-sectional area of the first transfer hole 541 perpendicular to the first direction may increase toward the fire-extinguishing member 400. Accordingly, the first transfer hole 541 of the transfer hole 540 may cause the fire-extinguishing member 400 to operate rapidly by increasing a region in which flames or smoke generated from the battery cell 200 come into contact with the fire-extinguishing member 400 if the battery cell 200 ignites.

The second transfer hole 542 may be connected to the first transfer hole 541 and disposed to face the battery cell 200. The second transfer hole 542 according to the present embodiment may refer to a lower side region of the transfer hole 540, which passes through the lower surface of the support body 510. In one embodiment, the cross-sectional area of the first transfer hole 541 may increase toward the fire-extinguishing member 400, and a cross-sectional area of the second transfer hole 542 may increase toward the battery cell 200.

A cross-sectional area of the second transfer hole 542 perpendicular to the first direction may increase toward the battery cell 200. Accordingly, the second transfer hole 542 may cause the fire-extinguishing material supplied from the fire-extinguishing member 400 to be sprayed over a wider area, which can improve fire-extinguishing efficiency.

The support member 500 according to the present embodiment may further include a support rib 550.

The support rib 550 is disposed between the support body 510 and the fire-extinguishing member 400, and may be in contact with the fire-extinguishing member 400. The support rib 550 may reduce movement of the fire-extinguishing member 400 due to a difference between a thickness of the fire-extinguishing member 400 and the separation distance between the support body 510 and the cover 300. Accordingly, the support rib 550 may prevent or substantially prevent the fire-extinguishing member 400 from being changed in position or damaged due to external force or vibration.

The support rib 550 according to the present embodiment may protrude from the upper surface of the support body 510 facing the fire-extinguishing member 400 toward the lower surface of the fire-extinguishing member 400. An upper end portion of the support rib 550 may be in contact with the lower surface of the fire-extinguishing member 400. A length of the support rib 550 may be equal to a difference between the thickness of the fire-extinguishing member 400 and the separation distance between the support body 510 and the cover 300. In another embodiment, the length of the support rib 550 may be less than the difference between the thickness of the fire-extinguishing member 400 and the separation distance between the support body 510 and the cover 300.

A plurality of support ribs 550 may be provided. The plurality of support ribs 550 may be disposed to be spaced apart from each other on the support body 510, and may be individually in contact with different portions of the lower surface of the fire-extinguishing member 400 facing the support body 510. However, a number and interval of the support ribs 550 may be variously changed in design depending on the area, shape, or the like of the support body 510.

The battery pack according to the present embodiment may further include a holder 600. In one embodiment, the holder 600 and the support body 510 may be arranged to face each other in a first direction. The first connection member 520 may comprise a first connection body 521 extending from one of the holder 600 and the support body 510.

The holder 600 may be disposed between the battery cell 200 and the support member 500. The holder 600 may support the plurality of battery cells 200 inside the housing 100 and maintain an interval between the adjacent battery cells 200.

The holder 600 may include a holder body 610, a vent hole 620, and an alignment member 630.

The holder body 610 may be formed to have a shape of a plate that is seated on the battery cells 200.

The holder body 610 according to the present embodiment may be formed to have a substantially flat shape. The holder body 610 may be disposed between the support body 510 and the upper end portion of the battery cell 200. In an embodiment, an upper surface of the holder body 610 may be disposed to face the support body 510 in parallel. A lower surface of the holder body 610 may be seated on an upper side surface of the battery cell 200, in which the vent V is formed.

The vent hole 620 may be disposed to pass through the holder body 610 and face the vent V. The vent hole 620 may cause emissions, such as flames, gases, or the like, discharged from the vent V to be transferred to the internal space of the housing 100 through the holder body 610.

The vent hole 620 according to the present embodiment may have a shape of a hole that vertically passes through the holder body 610. A cross-sectional area of the vent hole 620 may be smaller than a cross-sectional area of the battery cell 200. However, a cross-sectional shape of the vent hole 620 may be changed in design to any of various shapes other than the circular shape shown in FIG. 1.

A plurality of vent holes 620 may be provided. The plurality of vent holes 620 may be disposed to be spaced apart from each other in the holder body 610. The plurality of vent holes 620 may be disposed to individually face the vents V of different battery cells 200.

The alignment member 630 may extend from the holder body 610 and may be inserted between the adjacent battery cells 200. The alignment member 630 may align an interval between the battery cells 200 to a certain size (e.g., a set size).

The alignment member 630 according to the present embodiment may extend vertically downward from a lower side surface of the holder body 610. Both, or opposite, side surfaces of the alignment member 630 may be disposed around (e.g., to respectively surround) upper peripheral surfaces of a pair of adjacent battery cells 200. A plurality of alignment members 630 may be provided. Each of the plurality of alignment members 630 may be inserted individually between the adjacent battery cells 200 of the pairs of adjacent battery cells 200.

The battery pack according to the present embodiment may further include a holder rib 700.

The holder rib 700 extends from the holder 600 toward the support member 500 and may be in contact with the support member 500.

The holder rib 700 according to the present embodiment may protrude from an upper surface of the holder body 610 toward the support body 510. An upper end portion of the holder rib 700 may be in contact with the lower surface of the support body 510. The upper end portion of the holder rib 700 may be disposed in a position that does not directly face a transfer hole 540. Accordingly, the holder rib 700 may distribute loads acting between the first connection member 520 and the second connection member 530 by providing a supporting force to the support body 510 separately from the first connection member 520 and the second connection member 530. In addition, the holder rib 700 may prevent or substantially prevent the support body 510 from being displaced from a regular position thereof when the connection between the first connection member 520 and the second connection member 530 is released due to damage or the like to the first connection member 520 and the second connection member 530.

Herein, an operation of the battery pack according to the present embodiment will be described.

Referring to FIGS. 1 to 9, in an event of thermal runaway or ignition of any one of the battery cells 200, emissions, such as flames, gases, smoke, or the like, are discharged from the vents V of the battery cell 200.

The emissions discharged from the vent V flow into the transfer hole 540 through the internal space of the housing 100 and are transferred to the fire-extinguishing member 400 through the transfer hole 540.

The fire-extinguishing member 400 is heated due to the temperature of the emissions discharged from the vent V.

As the temperature of the fire-extinguishing member 400 rises above a certain temperature (e.g., the set temperature), the fire-extinguishing member 400 sprays the fire-extinguishing material to the outside by chemical action, such as combustion, or physical action, such as rupture.

The fire-extinguishing material sprayed from the fire-extinguishing member 400 flows into the internal space of the housing 100 through the transfer hole 540 and is transferred to the battery cell 200 to extinguish the fire.

Herein, a battery pack according to another embodiment of the present invention will be described.

The battery pack according to the present embodiment may be configured so as to differ in a configuration of a support member 500 from the embodiment of FIG. 1. Accordingly, in describing the battery pack according to the present embodiment, a configuration of the support member 500 that is not described in the battery pack according to the embodiment of FIG. 1 will be described.

For a remaining configuration of the battery pack according to the present embodiment, the description of the battery pack of FIG. 1 may be applied as is.

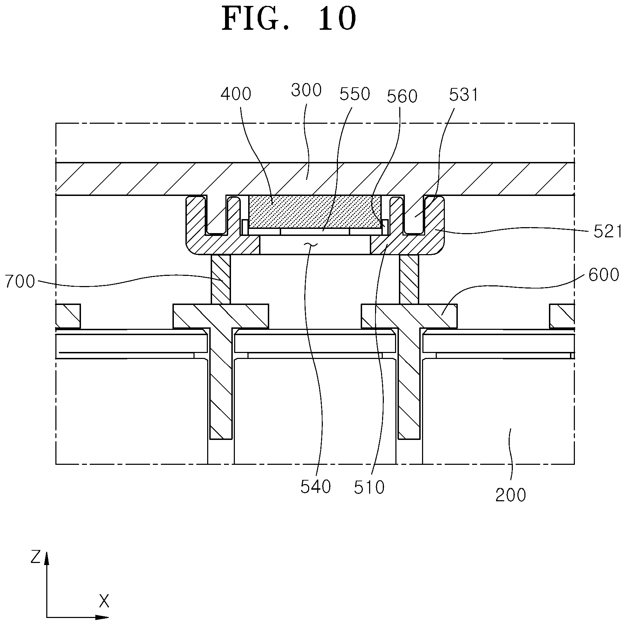

FIG. 10 is a cross-sectional view schematically illustrating a configuration of the support member according to the present embodiment of the present invention.

Referring to FIG. 10, the support member 500 according to the present embodiment may further include a fixing rib 560.

In FIG. 10, the support member 500 according to the present embodiment is illustrated as including both the fixing rib 560 and a support rib 550 as an example. However, in the present embodiment, the support member 500 may be configured to include only the fixing rib 560.

The fixing rib 560 extends from a support body 510 toward the cover 300, and may be disposed to face a side surface of the fire-extinguishing member 400.

The fixing rib 560 according to the present embodiment may protrude from an upper surface of the support body 510, which does not directly face the fire-extinguishing member 400, toward the lower surface of the cover 300. An inner side surface of the fixing rib 560 may be disposed to face the side surface of the fire-extinguishing member 400, which is parallel to the first direction. Accordingly, the fixing rib 560 may prevent or substantially prevent the fire-extinguishing member 400 from moving in a direction intersecting the first direction due to external vibration or the like.

A plurality of fixing ribs 560 may be provided. The plurality of fixing ribs 560 may be arranged along a peripheral surface of the fire-extinguishing member 400. A number, interval, or the like of the fixing ribs 560 may be variously changed in design depending on a size or the like of the fire-extinguishing member 400.

Herein, a battery pack according to another embodiment of the present invention will be described.

The battery pack according to the present embodiment may be configured to differ from the battery packs according to the previously described embodiments of the present invention in configurations of a first connection member 520 and a second connection member 530. Accordingly, in describing the battery pack according to the present embodiment, a configuration of a support member 500 that is not described in the battery packs according to the previously described embodiments of the present invention will be described.

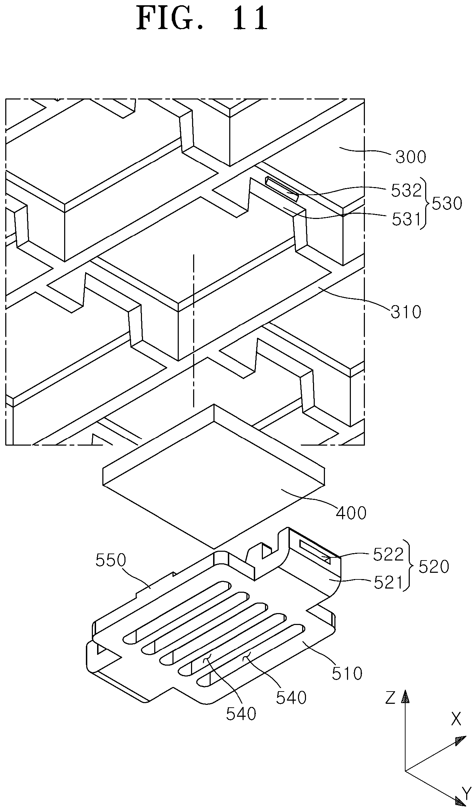

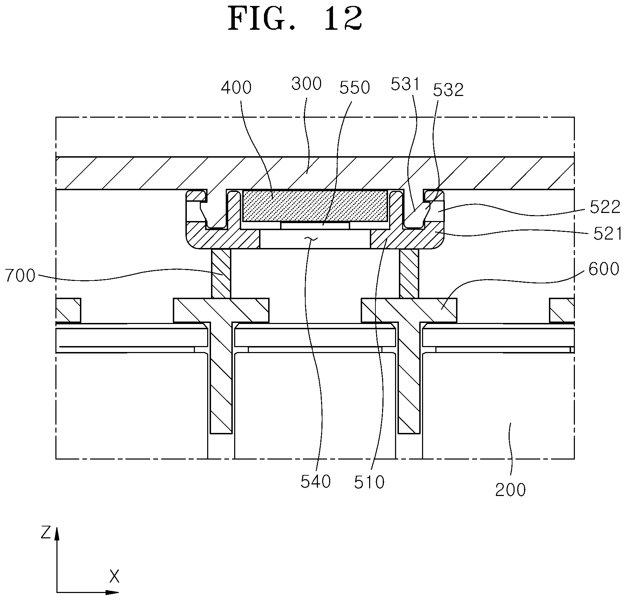

FIG. 11 is an exploded perspective view schematically illustrating a configuration of the support member according to another embodiment of the present invention; and FIG. 12 is a cross-sectional view schematically illustrating a configuration of the support member of FIG. 11.

Referring to FIGS. 11 and 12, the first connection member 520 according to the present embodiment may further include a connection hole 522.

The connection hole 522 may pass through a first connection body 521. In one embodiment, the first connection member 520 may further comprise the connection hole 522 passing through the first connection body 521.

The connection hole 522 according to the present embodiment may be formed to have a shape of a hole passing through the first connection body 521 in the second direction. However, the connection hole 522 is not limited thereto, and may also pass through the first connection body 521 in the first direction, pass through the first connection body 521 in the third direction, or pass through the first connection body 521 in a direction different from the first and third directions.

An end portion of the connection hole 522 may be connected to an internal space of the first connection body 521. A plurality of connection holes 522 may be provided. At least one or more connection holes 522 may be formed in different or respective first connection bodies 521.

The second connection member 530 according to the present embodiment may further include an insertion part 532.

The insertion part 532 extends from the second connection body 531 and may be inserted into the connection hole 522. The insertion part 532 may extend from a second connection body 531 in a direction intersecting the first direction. Accordingly, when the insertion part 532 is inserted into the connection hole 522, a support body 510 may not move in a direction parallel to the first direction.

The insertion part 532 according to the present embodiment may protrude from the second connection body 531 toward the connection hole 522. As an example, the insertion part 532 may protrude from the second connection body 531 in a direction parallel to the second direction. However, the extending direction of the insertion part 532 is not limited to the direction described above, and may be variously changed within a range that intersects the first direction depending on the direction through which the connection hole 522 passes or the like.

The insertion part 532 may be inserted into the connection hole 522 as the second connection body 531 is inserted into the first connection body 521. When the insertion part 532 is inserted into the connection hole 522, the insertion part 532 may be caught and coupled to an inner side surface of the first connection body 521, which surrounds the connection hole 522.

An outer side surface of the insertion part 532 may be disposed to be inclined with respect to the first direction. As an example, the insertion part 532 may be formed such that a length of the insertion part 532 protruding from the second connection body 531 decreases (e.g., gradually decreases) toward an end portion of the second connection body 531. Accordingly, when the second connection body 531 is inserted into the first connection body 521, the insertion part 532 may be smoothly, or easily, inserted into the connection hole 522 due to an inclination angle of the outer side surface thereof. In addition, when the insertion part 532 is inserted into the connection hole 522, the insertion part 532 may be caught and coupled to the inner side surface of the second connection body 531, thereby restricting the support body 510 from moving in a direction parallel to the first direction.

A specific shape of the insertion part 532 may be changed in design into any of various shapes other than a hook shape, as shown in FIG. 12, which may restrict the support body 510 from moving in a direction parallel to the first direction inside the connection hole 522.

Herein, a battery pack according to another embodiment of the present invention will be described.

The battery pack according to the present embodiment may be configured to differ from the battery pack of FIG. 11 in configurations of a first connection member 520 and a second connection member 530. Accordingly, in describing the battery pack according to the present embodiment, configurations of the first connection member 520 and the second connection member 530, which are not described in the battery pack of FIG. 11, will be described.

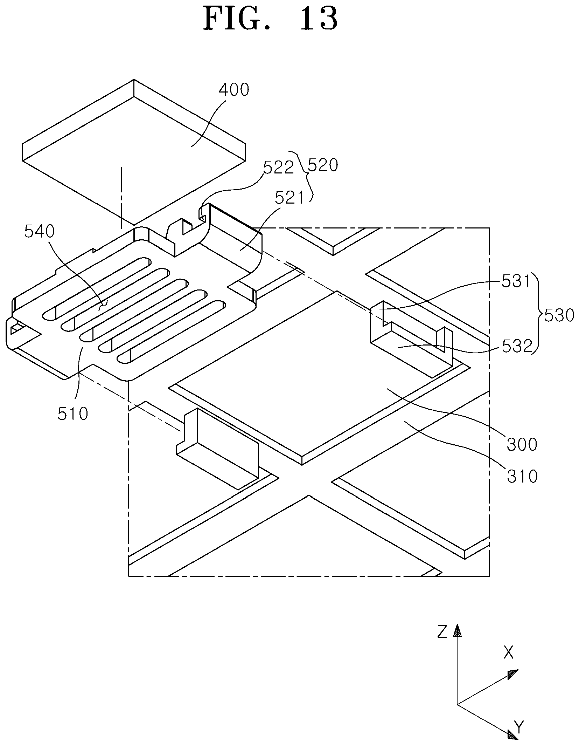

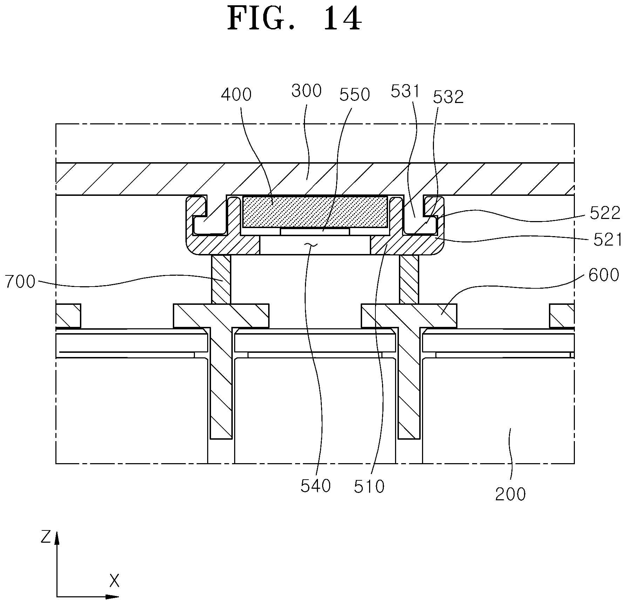

FIG. 13 is an exploded perspective view schematically illustrating a configuration of a support member according to another embodiment of the present invention; and FIG. 14 is a cross-sectional view schematically illustrating a configuration of the support member of FIG. 13.

Referring to FIGS. 13 and 14, a connection hole 522 according to the present embodiment may extend in a direction intersecting the first direction.

As an example, the connection hole 522 may be formed to have a shape of a groove that is formed to be recessed in the second direction from an inner side surface of a first connection body 521 into which a second connection body 531 is inserted. The connection hole 522 may extend in the third direction. Both, or opposite, end portions of the connection hole 522 may respectively pass through both, or opposite, surfaces of the first connection body 521, which are perpendicular to the third direction. However, the extending direction of the connection hole 522 is not limited to the direction described above, and may be variously changed in design within a range that intersects the first direction.

When the insertion part 532 is inserted into the connection hole 522, a support body 510 may be reciprocated in the extending direction of the connection hole 522.

When the support body 510 is moved in a direction parallel to the extending direction of the connection hole 522, the second connection body 531 and the insertion part 532 may be inserted into an internal space of the first connection body 521 and the connection hole 522 or may be separated from the internal space of the first connection body 521 and the connection hole 522, respectively through the both, or opposite, end portions of the connection hole 522.

Herein, a battery pack according to another embodiment of the present invention will be described.

The battery pack according to the present embodiment may be configured to differ in a configuration of a support member 500 from the battery packs of FIGS. 1 and 10. Accordingly, in describing the battery pack according to the present embodiment, a configuration of the support member 500, which is not described in the battery packs of FIGS. 1 and 10, will be described.

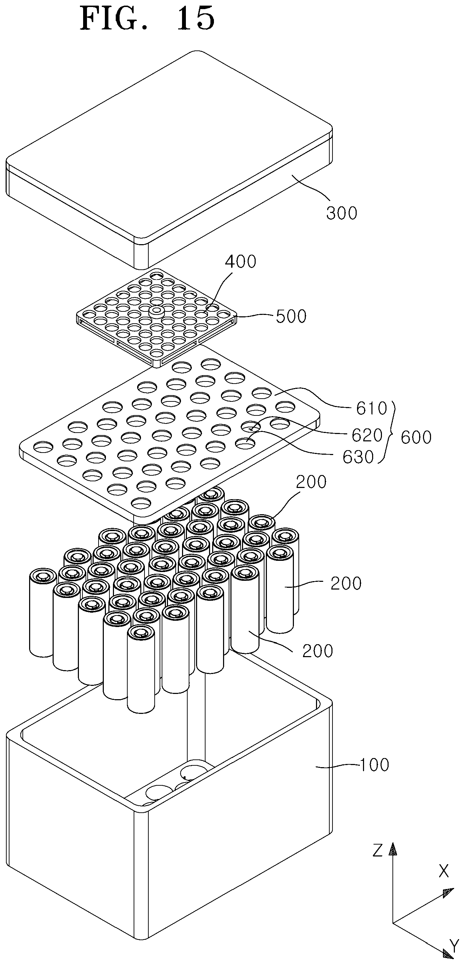

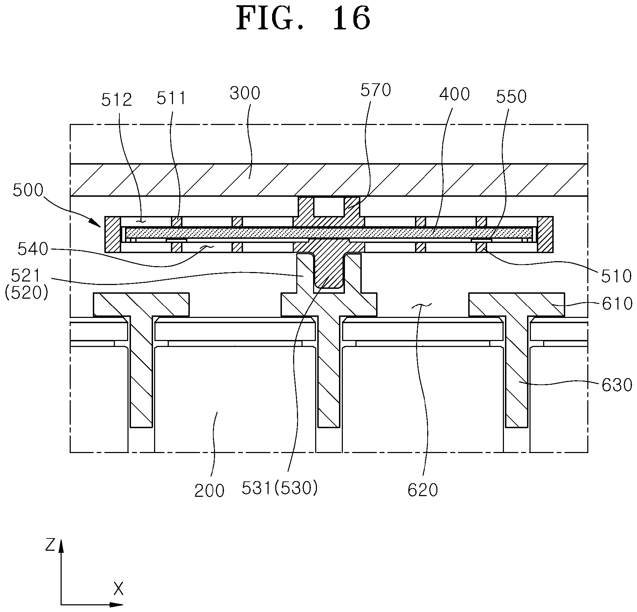

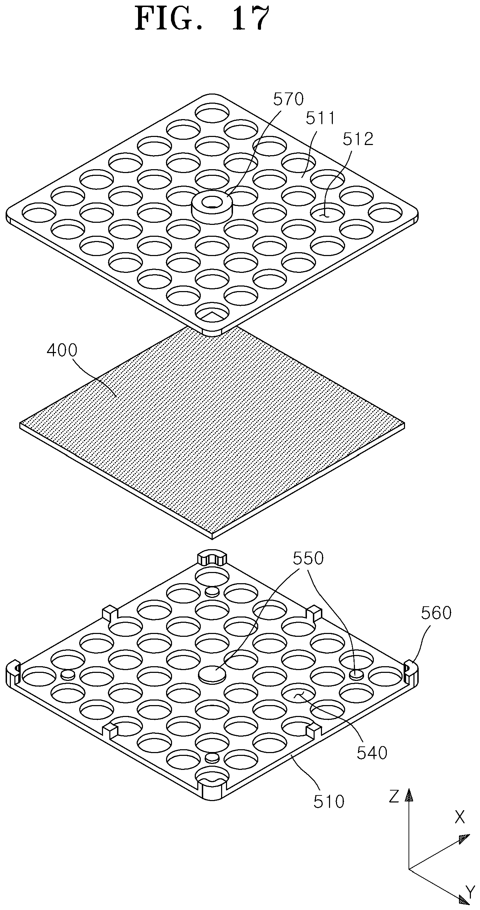

FIG. 15 is an exploded perspective view schematically illustrating a configuration of the battery pack according to another embodiment of the present invention; FIG. 16 is a cross-sectional view schematically illustrating a configuration of the support member of the battery pack of FIG. 15; and FIG. 17 is an exploded perspective view schematically illustrating a configuration of the support member of FIG. 15.

In FIGS. 15 to 17, the battery pack according to the present embodiment is configured not to include the holder rib 700 as an example, but, the battery pack according to the present embodiment is not limited thereto and may also be configured to include the holder rib 700.

Referring to FIGS. 15 to 17, each of a first connection member 520 and a second connection member 530 according to the present embodiment may be provided in one of a support body 510 and the holder 600.

Herein, a case in which the first connection member 520 is provided in the holder 600 and the second connection member 530 is provided in the support body 510 will be described as an example. However, the present invention is not limited thereto, and the first connection member 520 may be provided in the support body 510 and the second connection member 530 may be provided in the holder 600.

The first connection member 520 according to the present embodiment may include a first connection body 521.

The first connection body 521 may extend from one of the support body 510 and the holder 600.

The first connection body 521 according to the present embodiment may extend from the holder body 610 toward the support body 510. The first connection body 521 may be disposed parallel to the first direction. An upper end portion of the first connection body 521 may be disposed to face a lower surface of the support body 510 in the first direction. The first connection body 521 may be formed such that an interior is hollow. An upper surface of the first connection body 521 facing the support body 510 may be open.

In FIG. 16, the first connection body 521 is illustrated as being formed as a single piece, as an example, but the first connection body 521 is not limited thereto, and may be provided as a plurality of pieces.

In the above, the first connection body 521 is described as extending from the holder body 610, as an example, but the first connection body 521 is not limited thereto, and when the first connection member 520 is provided in the support body 510, the first connection body 521 may extend from the support body 510 toward the holder body 610.

The second connection member 530 according to the present embodiment may include a second connection body 531.

The second connection body 531 may extend from the other of the support body 510 and the holder 600.

The second connection body 531 according to the present embodiment may extend from the support body 510 toward the holder body 610. The second connection body 531 may be disposed parallel to the first direction. A lower end portion of the second connection body 531 may be disposed to face an open side of the first connection body 521. As a separation distance between the holder body 610 and the support body 510 is reduced to a certain length or less, the second connection body 531 may be inserted into the first connection body 521.

In an embodiment, an outer side surface of the second connection body 531 may be press-fitted or interference-fitted into an inner side surface of the first connection body 521. Accordingly, the second connection body 531 may be fixed while being inserted into the first connection body 521.

A number of the second connection bodies 531 may be the same as the number of the first connection bodies 521.

In the above, the second connection body 531 is described as extending from the support body 510, as an example, but the second connection body 531 is not limited thereto, and, when the second connection member 530 is provided in the holder body 610, the second connection body 531 may extend from the holder body 610 toward the support body 510.

The support member 500 according to the present embodiment may further include a support cover 511.

The support cover 511 may be disposed between the cover 300 and the fire-extinguishing member 400.

The support cover 511 according to the present embodiment may be formed to have a generally sheet shape. The support cover 511 may be disposed to face the support body 510 in the first direction with the fire-extinguishing member 400 interposed therebetween. The fire-extinguishing member 400 may be accommodated in a space formed between the support body 510 and the support cover 511, and, accordingly, in a case in which the fire-extinguishing member 400 cannot be in direct contact with the cover 300, such as when a curve is formed in an inner side surface of the cover 300, the support cover 511 may stably support the upper surface of the fire-extinguishing member 400 in place of the cover 300. However, a cross-sectional shape, area, and the like of the support cover 511 are not limited to those shown in FIG. 17, and may be variously changed in design.

The support cover 511 may be separated from the support body 510, as shown in FIG. 17, or may be connected to the support body 510. In this case, a side of the support cover 511 may be rotatably connected to a side of the support body 510 in a direction intersecting the first direction. Accordingly, the support cover 511 may open and close the space, in which the fire-extinguishing member 400 is accommodated, through a rotational motion.

The support cover 511 may include a cover hole 512. The cover hole 512 according to the present embodiment may have the shape of a hole passing through the support cover 511 in the first direction. Both, or opposite, sides of the cover hole 512 may be connected to the internal space of the housing 100 and a space between the support body 510 and the support cover 511, respectively.

A plurality of cover holes 512 may be provided. The cover holes 512 may be disposed to be spaced apart from each other inside the support cover 511. The cover hole 512 may be disposed to face the transfer hole 540, or may be disposed to be offset from the transfer hole 540. However, a number and cross-sectional shape of the cover holes 512 are not limited to those shown in FIG. 16, and may be variously changed in design.

In the present embodiment, when the support member 500 includes a support rib 550, the support rib 550 may reduce movement of the fire-extinguishing member 400 due to a difference between the thickness of the fire-extinguishing member 400 and a separation distance between the support body 510 and the support cover 511. In an embodiment, a length of the support rib 550 may be equal to the difference between the thickness of the fire-extinguishing member 400 and the separation distance between the support body 510 and the support cover 511. In another embodiment, the length of the support rib 550 may be less than the difference between the thickness of the fire-extinguishing member 400 and the separation distance between the support body 510 and the support cover 511.

In the present embodiment, when the support member 500 includes a fixing rib 560, the fixing rib 560 may protrude from an upper surface of the support body 510, which does not directly face the fire-extinguishing member 400, toward a lower surface of the support cover 511.

The support member 500 according to the present embodiment may further include a cover rib 570.

The cover rib 570 extends from the support cover 511, and may be in contact with the cover 300. The cover rib 570 according to the present embodiment may be formed to have a shape of a rod extending from an upper surface of the support cover 511, which faces the cover 300, toward the cover 300. An upper end portion of the cover rib 570 may be in contact with the lower surface of the cover 300 or may be inserted into an inner side of the cover 300. Accordingly, the cover rib 570 may firmly support the support body 510, along with the first connection member 520 and the second connection member 530, inside the housing 100.

In FIGS. 16 and 17, the cover rib 570 is illustrated as being formed as a single piece, but the cover rib 570 is not limited thereto, and may be provided as a plurality of pieces. In this case, the cover ribs 570 may be disposed to be spaced apart from each other on the support cover 511, and individually in contact with different parts of the lower surface of the cover 300.

Herein, a battery pack according to another embodiment of the present invention will be described.

The battery pack according to the present embodiment may be configured so as to differ from the battery pack according to the previously described embodiment of the present invention in configurations of a first connection member 520 and a second connection member 530. Accordingly, in describing the battery pack according to the present embodiment, configurations of the first connection member 520 and the second connection member 530, which are not described in the battery pack according to the previously described embodiment of the present invention, will be described.

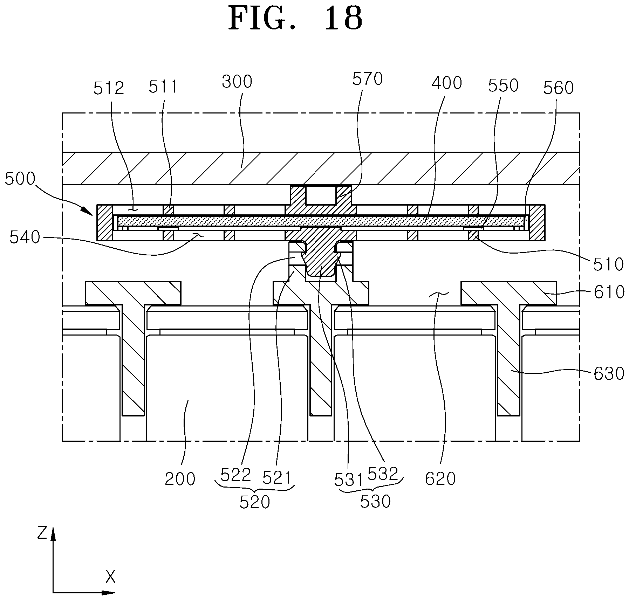

FIG. 18 is a cross-sectional view schematically illustrating a configuration of a support member according to another embodiment of the present invention.

Referring to FIG. 18, the first connection member 520 according to the present embodiment may further include a connection hole 522.

The connection hole 522 may pass through a first connection body 521.

The connection hole 522 according to the present embodiment may be formed to have a shape of a hole passing through the first connection body 521 in the second direction. However, the connection hole 522 is not limited thereto, and may also pass through the first connection body 521 in the first direction, pass through the first connection body 521 in the third direction, or pass through the first connection body 521 in a direction different from the first and third directions.

An end portion of the connection hole 522 may be connected to an internal space of the first connection body 521. A plurality of connection holes 522 may be provided. The plurality of connection holes 522 may be arranged along a peripheral surface of the first connection body 521.

The second connection member 530 according to the present embodiment may further include an insertion part 532.

The insertion part 532 extends from the second connection body 531, and may be inserted into the connection hole 522. The insertion part 532 may extend from a second connection body 531 in a direction intersecting the first direction. Accordingly, when the insertion part 532 is inserted into the connection hole 522, a support body 510 may not move in a direction parallel to the first direction.

The insertion part 532 according to the present embodiment may protrude from the second connection body 531 toward the connection hole 522. As an example, the insertion part 532 may protrude from the second connection body 531 in a direction parallel to the second direction. However, the extending direction of the insertion part 532 is not limited to the direction described above, and may be variously changed in design within a range that intersects the first direction depending on the direction through which the connection hole 522 passes, or the like.

The insertion part 532 may be inserted into the connection hole 522 as the second connection body 531 is inserted into the first connection body 521. When the insertion part 532 is inserted into the connection hole 522, the insertion part 532 may be caught and coupled to an inner side surface of the second connection body 531, which is around (e.g., surrounds) the connection hole 522.

An outer side surface of the insertion part 532 may be disposed to be inclined with respect to the first direction. As an example, the insertion part 532 may be formed such that a length of the insertion part 532 protruding from the second connection body 531 decreases (e.g., gradually decreases) toward an end portion of the second connection body 531. Accordingly, when the second connection body 531 is inserted into the first connection body 521, the insertion part 532 may be smoothly, or easily, inserted into the connection hole 522 due to an inclination angle of the outer side surface thereof. In addition, when the insertion part 532 is inserted into the connection hole 522, the insertion part 532 may be caught and coupled to the inner side surface of the second connection body 531, thereby restricting the support body 510 from moving in a direction parallel to the first direction.

However, a specific shape of the insertion part 532 may be changed in design into various shapes other than a hook shape, as shown in FIG. 18, which may restrict the support body 510 from moving in a direction parallel to the first direction inside the connection hole 522.

Herein, a battery pack according to another embodiment of the present invention will be described.

The battery pack according to the present embodiment may be configured so as to differ from the battery pack according to the embodiment of FIG. 15 in configurations of a first connection member 520 and a second connection member 530. Accordingly, in describing the battery pack according to the present embodiment, detailed configurations of the first connection member 520 and the second connection member 530, which are not described in the battery pack according to the embodiment of FIG. 15, will be described.

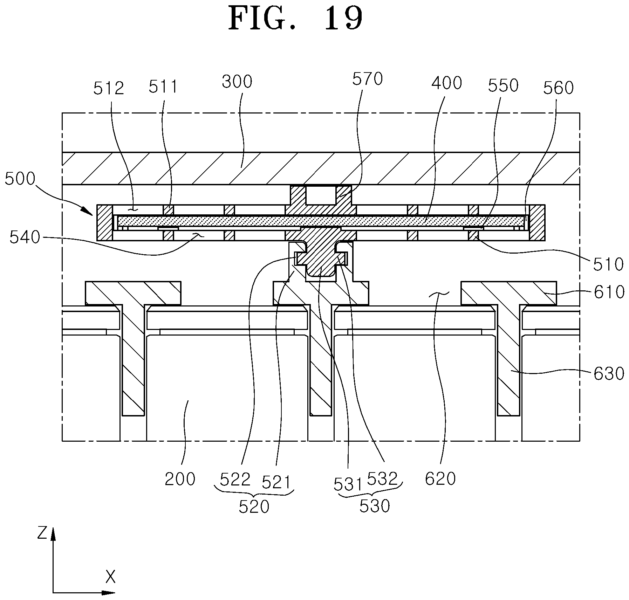

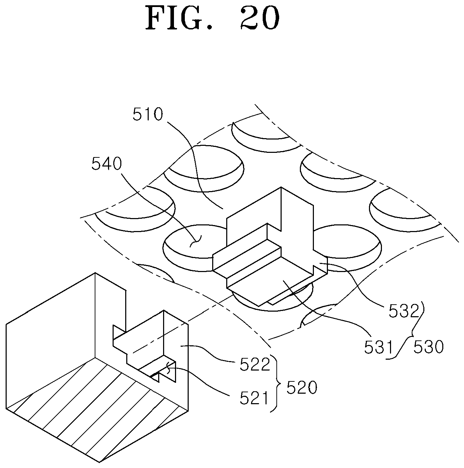

FIG. 19 is a cross-sectional view schematically illustrating a configuration of a support member according to another embodiment of the present invention; and FIG. 20 is an exploded perspective view schematically illustrating a configuration of the support member of FIG. 19.

Referring to FIGS. 19 and 20, a connection hole 522 according to the present embodiment may extend in a direction intersecting the first direction.

As an example, the connection hole 522 according to the present embodiment may be formed to have a shape of a groove that is formed to be recessed in the second direction from an inner side surface of a first connection body 521 into which a second connection body 531 is inserted. The connection hole 522 may extend in the third direction. Both, or opposite, end portions of the connection hole 522 may respectively pass through both surfaces of the first connection body 521, which are perpendicular to the third direction. However, the extending direction of the connection hole 522 is not limited to the direction described above, and may be variously changed in design within a range that intersects the first direction.

When the insertion part 532 is inserted into the connection hole 522, a support body 510 may be reciprocated in the extending direction of the connection hole 522.

When the support body 510 is moved in a direction parallel to the extending direction of the connection hole 522, the second connection body 531 and the insertion part 532 may be inserted into an internal space of the first connection body 521 and the connection hole 522 or may be separated from the internal space of the first connection body 521 and the connection hole 522, respectively, through both, or opposite, end portions of the connection hole 522.

According to one or more embodiments of the present invention, flames generated inside a housing due to thermal runaway or the like of a battery cell can be quickly extinguished by a fire-extinguishing member.

According to one or more embodiments of the present invention, damage to a fire-extinguishing member due to external shock or vibration can be prevented or substantially prevented by a support member.

According to one or more embodiments of the present invention, a support member can hold a certain amount of a fire-extinguishing member in a constant position, thereby ensuring consistent fire-extinguishing performance.

According to one or more embodiments of the present invention, a transfer hole allows flames generated when a battery cell ignites to smoothly, or easily, come into contact with a fire-extinguishing member, and allows a fire-extinguishing material supplied from the fire-extinguishing member to be smoothly, or easily, transferred to a battery cell.

However, aspects and effects obtainable through the present invention are not limited to the above aspects and effects, and other technical aspects and effects that are not mentioned will be clearly understood by those skilled in the art from the following description of the present invention.

While the present invention has been described with reference to some embodiments shown in the drawings, these embodiments are merely illustrative and it is to be understood that various modifications and equivalent other embodiments can be derived by those skilled in the art on the basis of the embodiments.

## Claims

1. A battery pack comprising:
a housing (100);
a battery cell (200) inside the housing (100) and comprising a vent (V);
a cover (300) coupled to the housing (100) and facing the battery cell (200);
a fire-extinguishing member (400) between the battery cell (200) and the cover (300) and configured to supply a fire-extinguishing material to the battery cell (200) if the battery cell (200) ignites; and
a support member (500) facing the fire-extinguishing member (400) and configured to support the fire-extinguishing member (400).

2. The battery pack as claimed in claim 1, wherein the vent (V) faces the cover (300).

3. The battery pack as claimed in claim 1 or 2, wherein the support member (500) comprises:
a support body (510) between the battery cell (200) and the fire-extinguishing member (400);
a first connection member (520) on one of the cover (300) and the support body (510); and
a second connection member (530) on another of the cover (300) and the support body (510) and connected to the first connection member (520).

4. The battery pack as claimed in claim 3, wherein
the cover (300) and the support body (510) face each other in a first direction,
the first connection member (520) comprises a first connection body (521) extending from one of the cover (300) and the support body (510), and
the second connection member (530) comprises a second connection body (531) extending from another of the cover (300) and the support body (510) and inserted in the first connection body (521).

5. The battery pack as claimed in claim **4,** wherein
the first connection member (520) further comprises a connection hole (522) passing through the first connection body (521), and
the second connection member (530) further comprises an insertion part (532) extending from the second connection body (531) and inserted in the connection hole (522).

6. The battery pack as claimed in claim 5, wherein the insertion part (532) extends from the second connection body (531) in a direction intersecting the first direction.

7. The battery pack as claimed in claim 5, wherein
the connection hole (522) extends in a direction intersecting the first direction, and
the insertion part (532) is movable in the direction in which the connection hole (522) extends.

8. The battery pack as claimed in claim 7, wherein an end portion of the connection hole (522) passes through the first connection body (521).

9. The battery pack as claimed in claim 3, wherein the support member (500) further comprises a transfer hole (540) passing through the support body (510) and facing the battery cell (200) and the fire-extinguishing member (400).

10. The battery pack as claimed in claim 9, wherein a cross-sectional area of the transfer hole (540) increases toward the battery cell (200).

11. The battery pack as claimed in claim 10, wherein
a cross-sectional area of the first transfer hole (541) increases toward the fire-extinguishing member (400), and
a cross-sectional area of the second transfer hole (542) increases toward the battery cell (200).

12. The battery pack as claimed in any one of claims 1 to 11, further comprising a holder (600) between the battery cell (200) and the support member (500) and configured to support the battery cell (200).

13. The battery pack as claimed in claim 12, wherein the support member (500) comprises:
a support body (510) between the holder (600) and the fire-extinguishing member (400);
a first connection member (520) on one of the holder (600) and the support body (510); and
a second connection member (530) on another of the holder (600) and the support body (510) and connected to the first connection member (520).

14. The battery pack as claimed in claim 13, wherein
the holder (600) and the support body (510) are arranged to face each other in a first direction,
the first connection member (520) comprises a first connection body (521) extending from one of the holder (600) and the support body (510), and
the second connection member (530) comprises a second connection body (531) extending from another of the holder (600) and the support body (510) and inserted in the first connection body (521) in a direction parallel to the first direction.

15. The battery pack as claimed in claim 13, wherein the support member (500) further comprises a support cover (511) between the cover (300) and the fire-extinguishing member (400).
